Europäisches Patentamt

European Patent Office

Office européen des brevets

(11) Publication number: **0 435 255 A1**

# EUROPEAN PATENT APPLICATION

(21) Application number: 90125504.2

(22) Date of filing: 27.12.90

(51) Int. Cl.5: **G11B 21/10**

(30) Priority: 27.12.89 JP 339181/89

(43) Date of publication of application:
03.07.91 Bulletin 91/27

(84) Designated Contracting States:
**DE GB IT**

(71) Applicant: **NEC CORPORATION**
**7-1, Shiba 5-chome Minato-ku**
**Tokyo 108-01(JP)**

(72) Inventor: **Sugimoto, Yukimasa, c/o NEC**
**Ibaragi Ltd.**
**367-2, Aza Ohcha, Sekidate**
**Sekijoumachi, Makabe-gun, Ibaraki(JP)**

(74) Representative: **Betten & Resch**
**Reichenbachstrasse 19**
**W-8000 München 5(DE)**

(54) **Magnetic disk apparatus.**

(57) In a magnetic disk apparatus, a magnetic disk has a plurality of servo sectors. Coarse and fine position data as servo data for positioning a magnetic head are recorded on each servo sector. The coarse position data is constituted by bit cells for identifying each data track and arranged in a track direction. Each bit cell represents a first or second value. Flux change occurs only at a boundary portion of a bit cell. Flux change occurs at leading edges of bit cells for every other bit in the same direction. Flux change does not occur at a central portion of a bit cell representing the first value, but occurs at a central portion of a bit cell representing the second value. Flux change occurs at the central portion of the bit cell in a direction opposite to that of flux change at the leading edge of a bit cell. The fine position data is constituted by two types of data respectively recorded at positions deviated from a central line of each data track toward the center of the disk and deviated toward the outer periphery of the disk such that a manner that a difference in amplitude between read signals serves as a function of a small positional deviation.

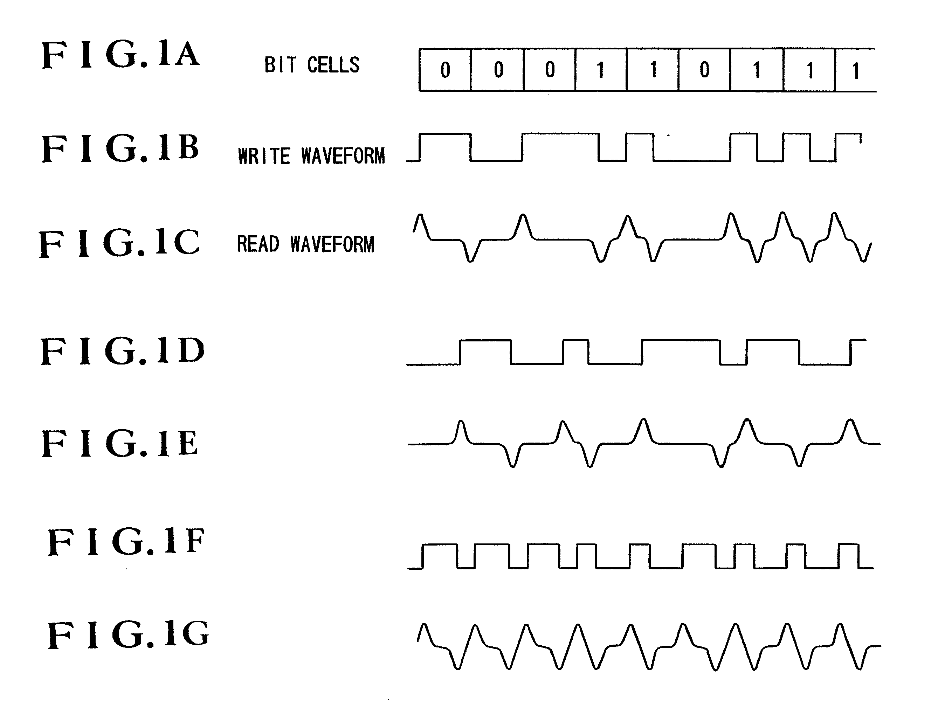

FIG.1A  BIT CELLS

FIG.1B  WRITE WAVEFORM

FIG.1C  READ WAVEFORM

FIG.1D

FIG.1E

FIG.1F

FIG.1G

EP 0 435 255 A1

## MAGNETIC DISK APPARATUS

Background of the Invention

The present invention relates to a magnetic disk apparatus for recording data so as to allow it to be freely read-accessed and, more particularly, to an improvement in encoding of servo data recorded on servo sectors of a magnetic disk apparatus of a sector servo scheme.

In recent compact magnetic disk apparatuses, in order to increase a storage capacity, a data track density is greatly increased. For this reason, a positional error between a magnetic head and a data track must be greatly reduced. Under the circumstances, magnetic disk apparatuses employing the sector servo scheme have been popular.

In the sector servo scheme, servo data for positioning a head to a data recording surface is written in advance, as has been conventionally known. For example, U.S.P. No. 4,027,338 discloses "Transducer Positioning System" (to be referred to as a first prior art hereinafter), which has an arrangement similar to a currently used sector servo system.

As another example, a literature associated with an apparatus available from DMA system Co., Ltd. ("Embedded servo comes to 51/4in. cartridge disk" (to be referred to a second prior art hereinafter) in "MINI-MICROSYSTEMS" February, 1983) is known.

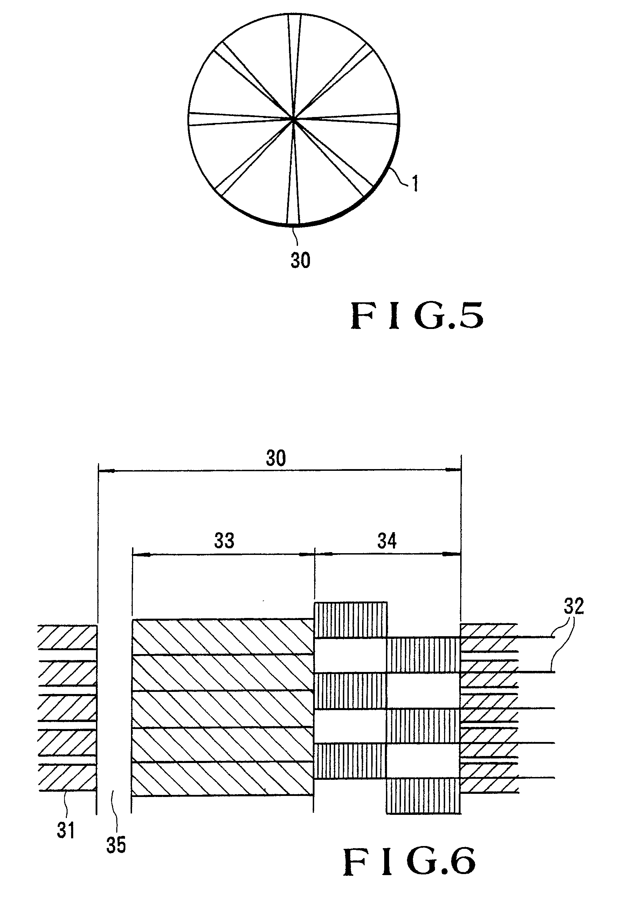

Fig. 5 shows data storage areas on a magnetic disk of the sector servo scheme. Reference numeral 1 denotes a magnetic disk; and 30, servo sectors. A large number of data tracks are formed on the data recording surface of the magnetic disk 1 to be concentric with the rotation center. Each servo sector 30 is formed to have a wedge-like shape and to radially cross these data tracks. In this case, eight servo sectors 30 are formed at angular intervals of 45°. That is, a head which passes through each data track detects servo data eight times per rotation. In practice, 32 to 64 servo sectors are formed on the data recording surface of the magnetic disk 1.

Fig. 6 shows the contents of each servo sector 30. Reference numeral 31 denotes user data recorded on a data track; and 32, central lines of data tracks. Referring to Fig. 6, a magnetic head (not shown) is moved over each data track from the left to the right. Reference numeral 33 denotes coarse position data for identifying a track; and 34 fine position data for detecting an offtrack amount within one track. These position data constitute servo data. Reference numeral 35 denotes a DC erase portion having no signals recorded thereon, which is formed to detect the start point of the coarse data 33.

The coarse data 33 is used to detect the current position of the head during a seek operation and must be designed to identify the maximum number of tracks through which the head passes during a time interval when the head is moved from one servo sector to another servo sector. In addition, since the magnetic head is not always located immediately above a track while it passes across a servo sector, a position between tracks must be detected. For this purpose, a code which is different from the code of an adjacent track by one bit, e.g., a gray code, is used. Note that MFM and 2-7RLL, which are modulation schemes used for a data write/read system, cannot be used in the coarse data. Because when the gray code is modulated by these schemes, the bits which have the same values with the adjacent tracks may cause different flux changes.

The fine position data 34 is constituted by data recorded at a position deviated from the central line of a track toward the center (upward in Fig. 6), and data recorded at a position deviated to the outer periphery of the disk (downward in Fig. 6).

In the above-described first prior art, flux change positions are shifted from each other depending on whether the servo data is "1" or "0", thus realizing a simple arrangement. However, such servo data includes no clock data, and hence synchronization of bit cells of coarse position data is difficult to establish.

In the second prior art, since clock data is arranged at the start position of each bit cell, synchronization of bit cells is easy to establish. However, since the flux change interval is shorter than that of the first prior art, data detection may suffer from errors.

Summary of the Invention

It is an object of the present invention to provide a magnetic disk apparatus which allows easy synchronization of bit cells and can prevent detection errors.

In order to achieve the above object, according to the present invention, there is provided a magnetic disk apparatus of a sector servo scheme in which servo data for moving and positioning a magnetic head to a desired position are recorded on a data recording surface so as to be aligned in directions having the same radius, wherein coarse position data of the servo data is constituted by a plurality of bit cells serving as a code string for identifying each of a plurality of adjacent data tracks and arranged in a track direction, each bit cell represents a first or second value, flux change occurs only at a boundary of each bit cell, i.e., a leading edge, trailing edge, or a central portion thereof, flux change occurs at leading edges of bit cells for every other bit in the same direction, no flux change occurs at a central portion of a bit cell representing the first value, flux change occurs at a central portion of a bit cell representing the second value, and a direction of the flux change occurring at the central portion of the bit cell is opposite to a direction of the flux change occurring at the leading edge of the bit cells for every other bit.

In reading of coarse data, pulses are detected at the leading edges of bit cells for every other bit. Since these detected signals can be used as clock data, synchronization of bit cells can be easily established. With this operation, a tracking operation of the magnetic head can be stably performed.

Brief Description of the Drawings

Figs. 1(a) to 1(g) show coarse position data of a magnetic disk used for a magnetic disk apparatus according to an embodiment of the present invention, in which Fig. 1(a) is a view showing bit cell values of the coarse position data, and Figs. 1(b) to 1(g) are waveform charts showing write and read waveforms;

Fig. 2 is a block diagram of the magnetic disk apparatus;

Fig. 3 is a block diagram showing an arrangement of a course servo detector in Fig. 2;

Figs. 4(a) to 4(ℓ) are waveform charts of signals at the respective components;

Fig. 5 is a view for explaining a data recording surface in a sector servo scheme; and

Fig. 6 is a view showing contents of a servo sector.

Description of the Preferred Embodiment

The present invention will be described in detail below with reference to the accompanying drawings. Figs. 1(a) to 1(g) show coarse data of a magnetic disk used for a magnetic disk apparatus according to an embodiment of the present invention. Fig. 1(a) shows data values of bit cells. Coarse position data is constituted by a combination of a first value, e.g., "0", and a second value, e.g., "1". Fig. 1(b) shows a write waveform of the coarse position data of these bits. Tracks are magnetized to the S or N poles in accordance with this waveform. Fig. 1(c) shows a read waveform of the coarse position data of these bits. The bit cells are sequentially read from the bit cell on the left end in Fig. 1(a). Flux change in the positive direction occurs at the leading edge (left end) of this first bit cell. Similarly, flux change in the positive direction occurs at the leading edges of the odd-numbered bit cells, i.e., third, fifth, and seventh bit cells. The timings of the leading edges of these odd-numbered bit cells are used as clock data. In addition, the leading edge of the first bit cell also serves as a start bit of the coarse data of the servo data. No flux change occurs at central portions of bit cells representing "0" (first, second, third, and sixth bit cells), whereas flux change in the negative direction occurs at central portion of bit cells representing "1" (fourth, fifth, seventh, eighth, and ninth bit cells). Flux change occasionally occurs at the leading edges of even-numbered bit cells, which are not used as clock data, in such a manner that flux change occurs without any inconsistency. For example, no flux change occurs between the third and fourth bit cells and between the fifth and sixth bit cells. The minimum flux change interval is 1/2 the bit cell period.

Note that Fig. 1(a) shows all the combinations of two bits.

Fig. 1(d) shows a waveform used to write data of bit cells in the first prior art. Fig. 1(e) shows a read waveform in the first prior art. Since these bit cells include no clock data, coarser flux change is inevitably caused. However, similar to the waveforms in Figs. 1(b) and 1(c) according to the present invention, the minimum flux change interval is 1/2 the bit cell period.

Fig. 1(f) shows a waveform used to write data of bit cells in the second prior art. Fig. 1(g) shows a read waveform in the second prior art. Flux change used as clock data occurs at each bit cell in the same direction. However, the minimum flux change interval is 1/3 the bit cell period. Therefore, in comparison with the above case wherein the minimum flux change interval is 1/2 the bit cell period, interference tends to occur between adjacent bits. This tends to cause bit shift.

According to the present invention, decoding of the code of each bit cell can be easily performed by simply detecting the occurrence of flux change near the center of the bit cell.

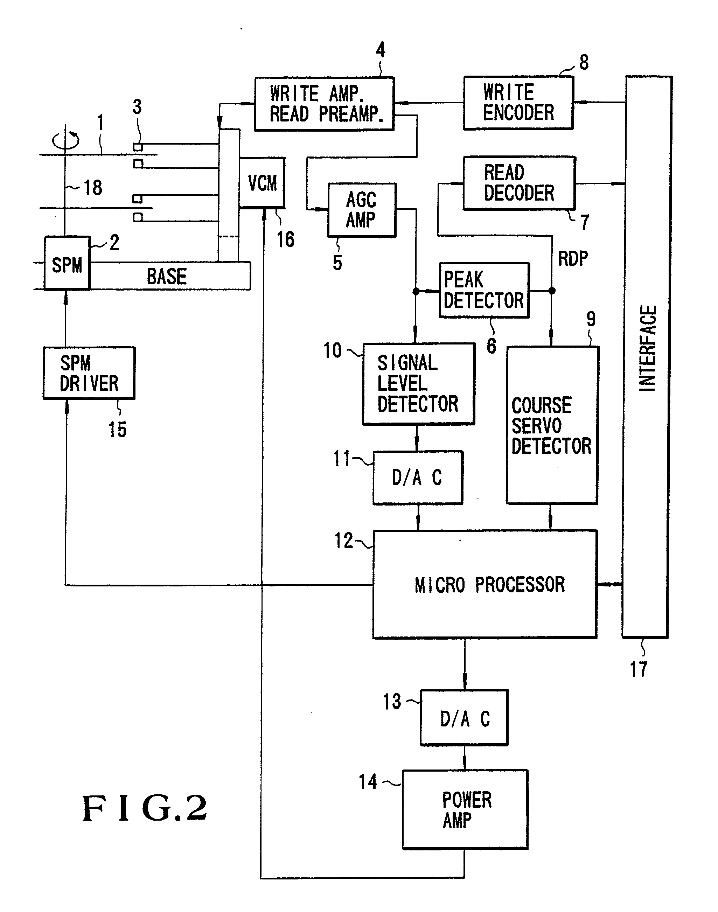

Fig. 2 shows an overall arrangement of a magnetic disk apparatus according to the present invention. Two magnetic disks 1 fixed to a spindle shaft are rotated by a spindle motor 2. Four magnetic heads 3 are pivotally mounted on a carriage and are driven to desired positions by a voice coil motor 16 as an actuator. Data read from the magnetic disk 1 by the magnetic head 3 is amplified by a read amplifier of a read/write amplifier assembly integrated as an LSI. The amplified data is further amplified by an automatic gain control amplifier 5. The sufficiently amplified read signal is then converted into read pulse data (RDP) by a peak detector 6. Since data other than servo data is recorded in a 2-7RLL code, this read pulse data is demodulated into NRZ data by a read decoder 7 and is supplied to an interface 17. In contrast to this , write data transmitted from a host unit is converted into a 2-7RLL code by a write encoder 8 through the interface 17 and is amplified by a write amplifier of the read/write amplifier assembly 4. The amplified data is then recorded in a data storage area on the magnetic disk 1.

Of servo sector data, coarse position data is detected by a coarse servo detector 9 and is subjected to data processing, as will be described later.

With regard to fine position data, the amplitude of its analog signal is detected by a signal level detector 10. The fine position data is then converted into a digital signal by an A/D converter 11 and is read into a microprocessor 12. The microprocessor 12 detects the current position of the magnetic head 3 on the basis of the input coarse and fine position data. The microprocessor 12 then performs calculation of servo control required to position the magnetic head 3 to a target position in accordance with an instruction received from the interface 17, thereby setting a digital value, used to drive the actuator, in the D/A converter 13. The D/A converter 13 converts the received digital signal into an analog signal. The analog signal is amplified by a power amplifier 14 and is then output to the voice coil motor 16. In addition, the microprocessor 12 outputs a control signal to a spindle motor driver 15 so as to control the spindle motor 2.

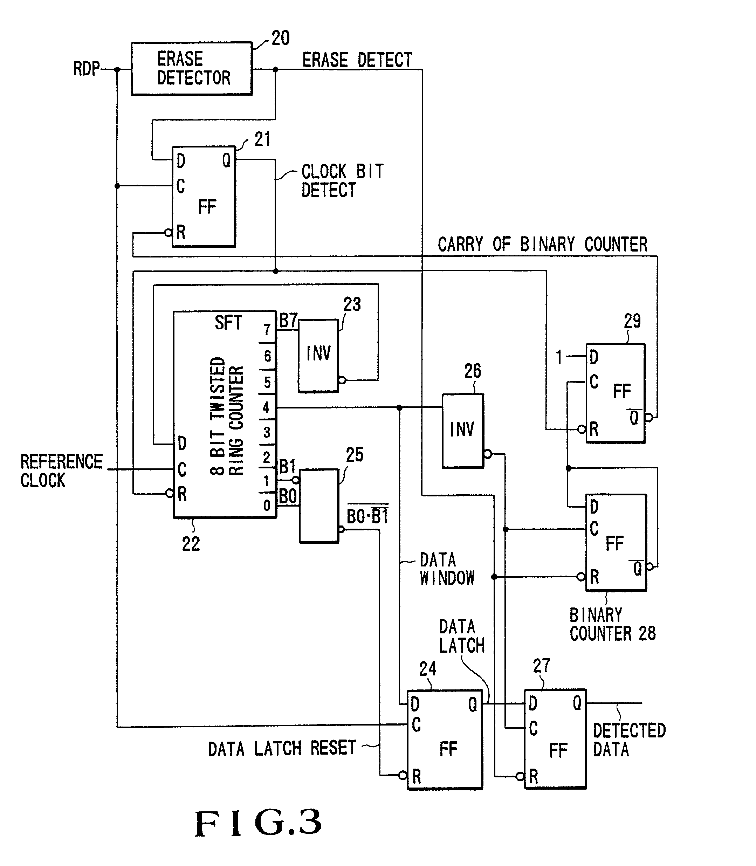

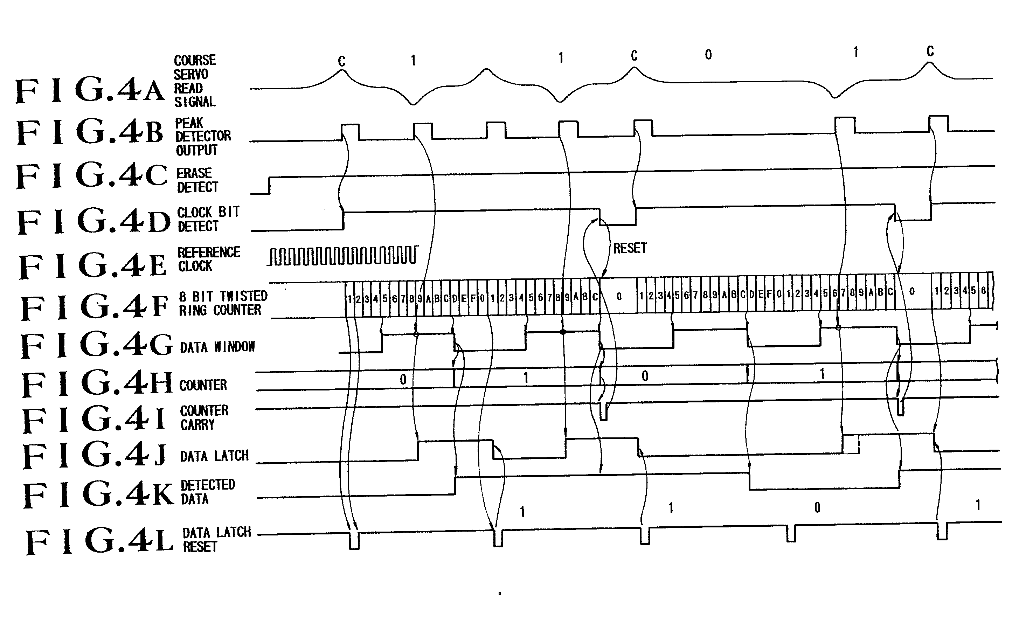

Fig. 3 shows an arrangement of the coarse servo detector 9 serving as a coarse position data detector. Figs. 4(a) to 4($\ell$) are timing charts of signal at the respective components of the detector 9. A method of decoding the code of coarse position data will be described below with reference to Figs. 3 and 4(a) to 4($\ell$).

The coarse servo detector 9 receives a reference clock (Fig. 4(e)) in addition to a read data pulse RDP (Fig. 4(b)) from the peak detector 6. In practice, several timing signals other than the above-mentioned signals are input to the detector 9 in order to prevent the detector 9 from being operation at unnecessary timings. However, since such signals are not required for the description of the present invention, a description thereof will be omitted. Note that Fig. 4(a) shows a coarse servo read signal.

The reference clock is used to operate a counter in accordance with the timing of a clock bit inserted in every two bits of the read data pulse RDP, thus forming a data discrimination window. In order to suppress variations in timing, the reference clock must have a sufficiently high resolution as compared with the bit cells of the coarse position data. In this embodiment, a clock having a period 1/16 the bit cell period is used. That is, if the bit cell period is 400 ns, the frequency of the reference clock is 40 MHz.

As described above, a DC erase portion is arranged in front of coarse position data so as to allow detection of the start potion of the coarse data. After an erase detect signal (Fig. 4(c)) is output by an erase detector 20, a clock bit detect signal (Fig. 4(d)) is output from a flip-flop circuit 21 by the first RDP. In response to this clock bit detect signal, an 8-bit twisted ring counter 22, which has been in a reset state, starts counting (Fig. 4(f)) the reference clocks. Note that this counter may be constituted by a normal module 16 counter. However, necessary timing signals can be more easily generated by the twisted ring counter 22 shown in Fig. 3 in which an output from the last stage of an 8-bit shift register is inverted by an inverter 23 and is returned to the first stage.

If the delay time of a logic circuit is short, an output from the fifth stage of the twisted ring counter 22 can be used as a data discrimination window signal. If the leading edge of the read data pulse RDP is detected when this data window signal (Fig. 4(j)) is at H level, the corresponding data is determined as "1", and a data latch output (Fig. 4(j)) from a flip-flop circuit 24 is set at H level. This data latch output is reset to L level by a data latch reset signal (Fig. 4($\ell$)) output from a logic circuit 25 at the timing of a central portion of the duration in which the data window signal is at L level. H-level detected data (Fig. 4(k)) is output from a flip-flop circuit 27 in response to a signal output from the inverter 26 when the data window signal is set at L level. As a result, "1" is detected.

A signal output from the inverter 26 at the timing of the trailing edge (the point where the signal is shifted from H level to L level) of a data window signal is counted twice by a binary counter constituted by flip-flop circuits 28 and 29. As a result, a carry signal is output from the flip-flop circuit 29. The flip-flop circuit 21 is reset by this carry signal, and the clock bit detect signal is temporarily set at L level. However, since the flip-flop circuit 21 is set by the read data pulse RDP output immediately after the circuit 21 is reset, the clock bit detect signal is set at H level again. Subsequently, a similar operation is repeated. The timing of the data window signal is gradually deviated from an optimal value because of the rotation speed error of the spindle motor. The clock bit detect signal is reset for every two bit cells in this manner to reestablish synchronization for every two bit cells so as to prevent such a timing deviation. Therefore, if the deviation is small enough, the above-described reset operation is not required.

In Fig. 4(j), a portion of the data latch waveform which is indicated by a dotted line represents a case wherein peak detection is sifted forward.

Data decoded by the read decoder 7 is a gray code and hence must be further converted into a normal binary code. However, since this conversion method is well known, a description thereof will be omitted.

As has been described above, according to the magnetic disk apparatus of the present invention, since coarse position data of servo data is designed such that clock data is detected in units of bits of bit cells, synchronization is easy to establish. In addition, since the minimum flux change interval is 1/2 the bit cell period, which is sufficiently long, detection errors can be prevented.

## Claims

1. A magnetic disk apparatus of a sector servo scheme in which servo data for moving and positioning a magnetic head to a desired position are recorded on a data recording surface so as to be aligned in directions having the same radius,
wherein coarse position data of the servo data is constituted by a plurality of bit cells serving as a code string for identifying each of a plurality of adjacent data tracks and arranged in a track direction, each bit cell represents a first or second value, flux change occurs only at a boundary of each bit cell, i.e., a leading edge, trailing edge, or a central portion thereof, flux change occurs at leading edges of bit cells for every other bit in the same direction, no flux change occurs at a central portion of a bit cell representing the first value, flux change occurs at a central portion of a bit cell representing the second value, and a direction of the flux change occurring at the central portion of the bit cell is opposite to a direction of the flux change occurring at the leading edge of the bit cells for every other bit.

2. A magnetic disk apparatus comprising:
one or a plurality of magnetic disks to be rotated by a spindle;
a magnetic head which is moved to a position near a surface of said magnetic disk so as to read and write data;
an actuator mechanism for moving said magnetic head to a desired position;
a position control circuit for driving said actuator mechanism;
a read/write circuit for performing data read and write operations; and
an interface for performing data communication with a host unit,
wherein said magnetic disk includes a plurality of wedge-like servo sectors formed to radially cross data tracks concentrically formed on at least one data recording surface,

coarse position data and fine position data as servo data for moving and positioning said magnetic head to a desired position are separately recorded on each of the servo sectors,
the coarse position data is constituted by a plurality of bit cells serving as a code string for identifying each of the data tracks and arranged in a track direction, each bit cell represents a first or second value, flux change occurs only at a boundary of each bit cell, i.e., a leading edge, trailing edge, or a central portion thereof, flux change occurs at leading edges of bit cells for every other bit in the same direction, no flux change occurs at a central portion of a bit cell representing the first value, flux change occurs at a central portion of a bit cell representing the second value, and a direction of the flux change occurring at the central portion of the bit cell is opposite to a direction of the flux change occurring at the leading edge of the bit cells for every other bit, and
the fine position data is constituted by data recorded at a position deviated from a central line of each data track toward the center of said disk, and data recorded at a position deviated from the central line toward the outer periphery of said disk in such a manner that a difference in amplitude between read signals serves as a function of a small positional deviation.

3. An apparatus according to claim 2, wherein said position control circuit comprises a digital coarse position data detector for detecting coarse position data, an analog amplitude detector for detecting fine position data, an analog-to-digital converter for converting the detected analog output into a digital value, a microprocessor for calculating a control amount for driving said actuator mechanism on the basis of servo data constituted by the detected coarse and fine position data and of target position data input from said interface circuit, a digital-to-analog converter for converting the calculated control amount into an analog value, and a driving circuit for driving said actuator mechanism in accordance with the control amount.

4. An apparatus according to claim 2, wherein said read/write circuit comprises read and write preamplifiers connected to said magnetic head, an automatic gain control amplifier for amplifying read data, a peak detector for detecting a peak of the read data, a demodulator for demodulating the data obtained by peak detection, and a modulator for modulating write data.

## F I G.1A   BIT CELLS

| 0 | 0 | 0 | 1 | 1 | 0 | 1 | 1 | 1 |

## F I G.1B   WRITE WAVEFORM

## F I G.1C   READ WAVEFORM

## F I G.1D

## F I G.1E

## F I G.1F

## F I G.1G

EP 0 435 255 A1

FIG.2

FIG.3

FIG.4A COURSE SERVO READ SIGNAL

FIG.4B PEAK DETECTOR OUTPUT

FIG.4C ERASE DETECT

FIG.4D CLOCK BIT DETECT

FIG.4E REFERENCE CLOCK

FIG.4F 8 BIT TWISTED RING COUNTER

FIG.4G DATA WINDOW

FIG.4H COUNTER

FIG.4I COUNTER CARRY

FIG.4J DATA LATCH

FIG.4K DETECTED DATA

FIG.4L DATA LATCH RESET

EP 0 435 255 A1

F I G.5

F I G.6

## DOCUMENTS CONSIDERED TO BE RELEVANT

EP 90125504.2

| Category | Citation of document with indication, where appropriate, of relevant passages | Relevant to claim | CLASSIFICATION OF THE APPLICATION (Int. Cl.5) |
|---|---|---|---|
| A | US - A - 4 149 200 (CARD) <br> * Fig. 1-10; abstract * | 1-4 | G 11 B 21/10 |
| A | EP - A1 - 0 069 549 (IRWIN INTERNATIONAL INC.) <br> * Fig. 1-4; claims 1-14 * | 1,2 | |
| A | EP - A1 - 0 082 645 (BURROUGHS CORP.) <br> * Fig. 1-7; abstract * | 1,2 | |
| A | EP - A1 - 0 141 499 (MEMOREX CORP.) <br> * Fig. 1-7; claims 1-4 * | 1,2 | |
| A | EP - A2 - 0 327 207 (IBM) <br> * Fig. 1-11; abstract * | 1,2 | |

TECHNICAL FIELDS
SEARCHED (Int. Cl.5)

G 11 B 21/00
G 11 B 5/00

The present search report has been drawn up for all claims

| Place of search | Date of completion of the search | Examiner |
|---|---|---|
| VIENNA | 14-02-1991 | BERGER |

EPO FORM 1503 03.82 (P0401)